# FASCICULE DE BREVET EUROPEEN

(11) **EP 1 645 736 B1**
(45) Date de publication et mention de la délivrance du brevet: **30.07.2008**
(21) Numéro de dépôt: 05300734.0
(22) Date de dépôt: 09.09.2005
(51) Int. Cl.: F02B 37/007, F02B 37/18, F02B 37/16

(54) **Dispositif de controle d'un système de suralimentation pour moteur diesel**
Vorrichtung zur Steuerung einer Aufladevorrichtung für einen Dieselmotor
Device for controlling a turbocharger system for a Diesel engine

(30) Priorité: 06.10.2004 FR 0452275
(43) Date de publication de la demande: 12.04.2006
(73) Titulaire: Peugeot Citroën Automobiles SA, 78943 Vélizy-Villacoublay Cedex (FR)
(72) Inventeur: Blanc, Jean-Christophe, 94230 Cachan (FR); Hoffmann, Nicolas, 75013 Paris (FR); Burq, Jean-François, 92000 Nanterre (FR); Portalier, Jacques, 92100 Boulogne Billancourt (FR)
(74) Mandataire: Ménès, Catherine

(56) Documents cités:
- EP-A- 1 302 646
- DE-A1- 19 835 594
- US-A- 5 035 114
- US-B1- 6 263 673
- PATENT ABSTRACTS OF JAPAN vol. 1996, no. 03, 29 mars 1996 (1996-03-29) & JP 07 293262 A (ISHIKAWAJIMA HARIMA HEAVY IND CO LTD), 7 novembre 1995 (1995-11-07)

## Description

La présente invention concerne un dispositif de contrôle d'un système de suralimentation pour moteur à allumage par compression.

L'invention trouve une application particulièrement avantageuse dans le domaine de l'industrie automobile.

D'une manière générale, les moteurs à allumage par compression, appelés aussi « moteurs diesels » nécessitent l'emploi d'un système de suralimentation pour obtenir des performances d'un niveau satisfaisant.

Dans la plupart des cas, cette suralimentation est obtenue par un turbocompresseur qui utilise l'énergie contenue dans les gaz d'échappement pour entraîner un compresseur, ce dernier fournissant alors de l'air à une pression plus élevée à l'admission du moteur. Cependant, les turbocompresseurs ont un champ de fonctionnement limité de sorte que, si on cherche à augmenter les performances à bas régime, on choisit plutôt un petit turbocompresseur à faible inertie, ceci au détriment des performances à haut régime car le turbocompresseur est alors utilisé dans des conditions où son rendement n'est pas favorable. Le contraire, c'est-à-dire l'utilisation d'un turbocompresseur à forte inertie, est aussi possible.

Pour résoudre la difficulté d'obtenir une suralimentation sur une plage de régime du moteur plus large, une première amélioration consiste à utiliser un turbocompresseur à géométrie variable, lequel constitue une application de plus en plus courante. Ce type de turbocompresseur permet en effet d'accélérer les gaz à bas régime pour obtenir de bonnes performances assez tôt dans le fonctionnement du moteur, tout en acceptant les débits importants correspondant aux régimes élevés. Mais ceci ne permet pas encore de couvrir complètement la plage d'utilisation du moteur.

C'est pourquoi certaines applications utilisent deux turbocompresseurs montés en parallèle et fonctionnant séquentiellement, c'est-à-dire que l'un des turbocompresseurs tourne en permanence quel que soit le régime moteur alors que l'autre n'est connecté qu'au-delà d'un certain seuil.

Ces systèmes de suralimentation comprennent, outre le couple de turbocompresseurs, un ensemble de capteurs et de vannes définissant divers modes de fonctionnement desdits systèmes et dont la gestion est assurée par un dispositif de contrôle.

Ce genre d'application est connu dans le domaine de l'aviation par le brevet américain 2,380,777. Des applications à la motorisation de véhicules automobiles ont été décrites par exemple dans le brevet américain 4,709,552 ou le brevet japonais 5-288069, mais toujours pour des moteurs à allumage commandé qui visent les hautes performances. Par ailleurs, il faut remarquer que la gestion d'un moteur à allumage commandé et celle d'un moteur diesel sont sensiblement différentes.

Il est connu du document DE 198 35 594, un moteur comportant deux rangées de cylindres, chaque rangée ayant son propre circuit d'échappement équipé d'une turbine associée à un compresseur. La seconde turbine au moins est équipée de moyens permettant de bloquer la circulation de gaz dans ce circuit, les deux circuits d'échappement étant par ailleurs reliés entre eux en amont des deux turbines. Le pilotage de la seconde turbine est effectué via le calcul moteur, en tenant compte d'un certain nombre de paramètres dont le débit massique à l'admission.

Les seules applications courantes pour les moteurs diesels concernent des moteurs de cylindrée importante, non compatibles avec une utilisation sur véhicule automobile, et qui par conséquent ont des régimes de rotation moins élevés et fonctionnent très souvent à régime stabilisé, d'où une gestion du fonctionnement simplifiée.

Dans le cadre de l'invention, c'est-à-dire un moteur diesel pour véhicule automobile équipé d'un système de suralimentation séquentielle à deux turbocompresseurs montés en parallèle, la gestion du fonctionnement du moteur doit tenir compte d'un ensemble complexe constitué du type de moteur, des objectifs de rendements spécifiques à l'application visée et des différentes contraintes de dépollution connues, existantes et à venir.

C'est pour résoudre ce problème que l'invention propose un dispositif de contrôle d'un système de suralimentation pour moteur à allumage par compression, le système de suralimentation comprenant un premier et un deuxième turbocompresseurs montés en parallèle fonctionnant séquentiellement, ainsi qu'un ensemble de capteurs et de vannes définissant divers modes de fonctionnement dudit système, notamment remarquable en ce que le dispositif de contrôle comprend :
- un moyen de sélection des modes de fonctionnement du système de suralimentation, apte à recevoir des informations fournis par lesdits capteurs et à sélectionner un mode de fonctionnement du système en fonction desdites informations,
- un moyen de commande desdites vannes en fonction du mode de fonctionnement sélectionné par ledit moyen de sélection, lesdits modes de fonctionnement incluant des modes transitoires lors de l'activation ou la désactivation du deuxième turbocompresseur,
- lesdits modes transitoires comportant, pour l'activation du deuxième turbocompresseur, l'ouverture partielle d'une vanne d'isolement de la turbine dudit second turbocompresseur afin de mettre en rotation sa turbine et d'augmenter la pression fournie par le compresseur du deuxième turbocompresseur jusqu'à ce que cette pression soit équivalente à celle fournie par le compresseur du premier turbocompresseur et le passage dans un mode bi-turbo avec l'ouverture complète de la vanne d'isolement.

Comme on le verra en détail plus loin, les modes de fonctionnement sont, selon l'invention :
- un mode mono-turbo régulé par une vanne de régulation de la turbine du premier turbocompresseur,
- un mode mono-turbo régulé par une vanne d'isolement de la turbine du deuxième turbocompresseur,
- un mode transitoire mono-turbo/bi-turbo,
- un mode bi-turbo,
- un mode transitoire bi-turbo/mono-turbo.

La description qui va suivre en regard du dessin annexé, donné à titre d'exemple non limitatif, fera bien comprendre en quoi consiste l'invention et comment elle peut être réalisée.

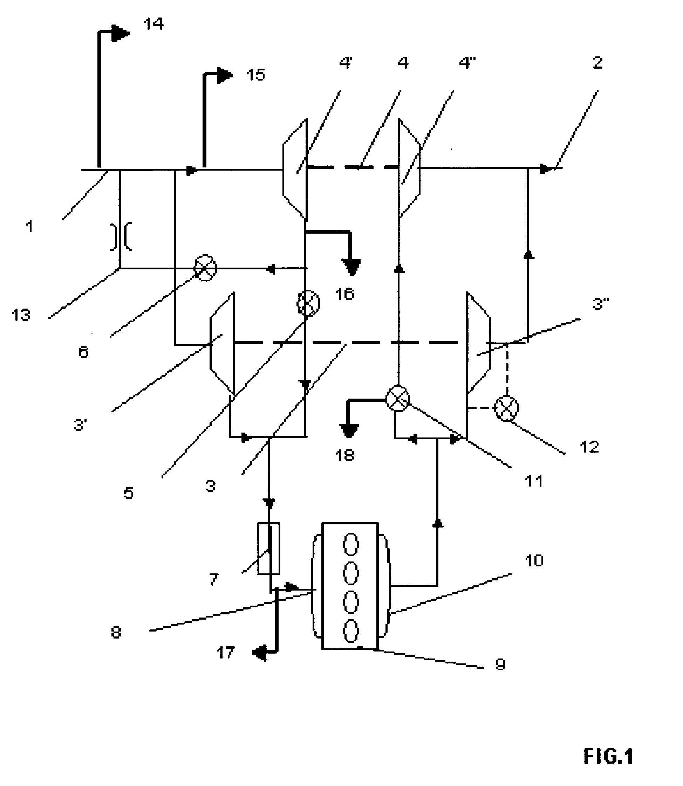

La figure 1 est un schéma d'un système de suralimentation pour moteur à allumage par compression à deux turbocompresseurs parallèles.

Sur la figure 1 est représenté un moteur 9 à allumage par compression, ou moteur diesel, équipé d'un système de double suralimentation composé d'un premier turbocompresseur 3, ou turbocompresseur principal, et d'un deuxième turbocompresseur 4, ou turbocompresseur secondaire.

Comme le montre la figure 1, les deux turbocompresseurs 3, 4 sont montés en parallèle et fonctionnent séquentiellement. A cet effet, deux vannes permettent d'isoler le turbocompresseur secondaire 4 du reste du moteur : une première vanne 5 d'isolement (VC2) montée en aval du compresseur 4' du deuxième turbocompresseur 4 et une deuxième vanne 11 d'isolement (VT2) montée en amont de la turbine 4" du deuxième turbocompresseur 4.

Le fonctionnement séquentiel du système de suralimentation de la figure 1 est le suivant.

Lors d'un fonctionnement à faible régime et faible charge, l'air d'admission est aspiré à travers un filtre, non représenté sur la figure 1. En sortie de ce filtre, le débit et la température sont mesurés par un capteur 14. L'air passe alors à travers le compresseur 3' du turbocompresseur principal 3 où sa pression augmente. L'air d'admission ne peut passer à travers le compresseur secondaire 4' car la vanne 5 d'isolement VC2 est fermée, de même qu'une vanne 6 de recirculation (Vrecirc) de l'air de suralimentation. L'air est ensuite refroidi dans l'échangeur 7 avant d'être dirigé dans le collecteur 8 d'admission après que sa pression ait été mesurée par le capteur 17 à l'entrée du moteur 9.

De là, il pénètre dans le moteur 9 pour participer au cycle de combustion. Le collecteur 10 récupère les gaz d'échappement qu'il dirige vers la turbine principale 3' du turbocompresseur principal 3, car la vanne 11 d'isolement VT2 de la turbine 4" du deuxième turbocompresseur 4 est fermée. La vanne 12 de régulation (WG1) de la turbine 3" du turbocompresseur principal 3 contrôle la pression de suralimentation en dérivant plus ou moins de débit d'échappement directement de l'amont de la turbine 3" vers la ligne 2 d'échappement, si bien que la turbine 3" reçoit moins d'énergie pour entraîner le compresseur 3', d'où une baisse de la pression de suralimentation si nécessaire.

Lorsque la charge et le régime atteignent un certain seuil, débute une phase de préparation au fonctionnement en double suralimentation parallèle.

En effet, afin d'éviter une brusque baisse du couple lors de la transition, le turbocompresseur secondaire 4 doit être accéléré pour que son point de fonctionnement se trouve dans une zone favorable de son champ de fonctionnement optimal. Pour cela, la vanne 11 d'isolement VT2 de la turbine 4" s'ouvre partiellement, permettant à une partie des gaz d'échappement normalement évacués à travers la vanne 12 de régulation WG1, qui est alors fermée, de mettre en rotation la turbine 4" du turbocompresseur secondaire 4. La position de la vanne VT2 d'isolement est contrôlée par un capteur 18.

La turbine 4" entraîne alors le compresseur 4' du turbocompresseur secondaire 4, cependant la pression qu'il génère ne permet pas d'autoriser l'ouverture de la vanne 5 d'isolation VC2 du compresseur 4'. Ainsi, afin d'éviter que la température n'augmente trop et que le compresseur 4' n'entre en pompage puisque la pression augmente alors que le débit d'air reste quasiment nul, la vanne 6 de recirculation d'air de suralimentation Vrecirc est placée en position ouverte. Le circuit 13 de recirculation met en communication la sortie du compresseur secondaire 4' et l'entrée 1 d'air d'admission commune aux deux compresseurs 3' et 4'. Ce circuit de recirculation génère une perte de charge de sorte que le débit d'air qui retourne en amont des compresseurs 3', 4' des deux turbocompresseurs 3, 4 voie sa pression diminuer.

Lorsque cette phase de transition est terminée, c'est-à-dire lorsque la pression fournie par le compresseur 4' du turbocompresseur secondaire 4, mesurée par un capteur 16 de pression, est équivalente à celle fournie par le compresseur 3' du turbocompresseur principal 3, la vanne VT2 d'isolement de la turbine 4" du turbocompresseur secondaire 4 s'ouvre complètement, la vanne Vrecirc de recirculation se ferme et la vanne VC2 d'isolement du compresseur 4' du turbocompresseur secondaire 4 s'ouvre. Les deux turbocompresseurs 3 et 4 fonctionnent alors en parallèle, et la pression de suralimentation est régulée par la vanne WG1 de régulation.

Dans le fonctionnement du moteur à deux turbocompresseurs parallèles qui vient d'être décrit en regard de la figure 1, on peut distinguer cinq modes différents, à savoir :
- un mode mono-turbo régulé par une vanne WG1 de régulation de la turbine 3" du premier turbocompresseur 3,
- un mode mono-turbo régulé par une vanne VT2 d'isolement de la turbine 4" du deuxième turbocompresseur 4,
- un mode transitoire mono-turbo/bi-turbo,
- un mode bi-turbo,
- un mode transitoire bi-turbo/mono-turbo.

Le passage de l'un à l'autre de ces modes de fonctionnement est géré par un dispositif de contrôle qui, dans le but de simplifier le fonctionnement du système de suralimentation à deux turbocompresseurs parallèles, comprend deux entités distinctes : d'une part, un moyen de sélection (superviseur) des modes de fonctionnement du système de suralimentation, apte à recevoir des informations fournis par des capteurs du système de suralimentation et à sélectionner un mode de fonctionnement du système en fonction desdites informations, et d'autre part, un moyen de commande (contrôleur) desdites vannes en fonction du mode de fonctionnement sélectionné par ledit moyen de sélection.

Les critères de sélection appliqués par le superviseur du système de suralimentation pour décider du mode de fonctionnement à mettre en oeuvre, ainsi que les actions correspondantes à engager par le contrôleur sont résumés sur les tableaux 1 et 2 ci-dessous.

C'est ainsi que le moyen de sélection, ou superviseur, décide le passage du mode mono-turbo régulé par ladite vanne WG1 de régulation au mode mono-turbo régulé par ladite vanne VT2 d'isolement :
- si la pression mesurée par le capteur 17 de pression à l'entrée du moteur 9 est supérieure à un seuil PS1 défini par cartographie selon le régime moteur,
- ou si le débit mesuré par un capteur 14 de débit à l'entrée d'admission du moteur est supérieur à un seuil DS1 défini par cartographie selon le régime moteur.

De même, le moyen de sélection décide le passage du mode mono-turbo régulé par ladite vanne VT2 d'isolement au mode mono-turbo régulé par ladite vanne WG1 de régulation :
- si la pression mesurée par le capteur 17 de pression à l'entrée du moteur est inférieure à un seuil PS1 défini par cartographie selon le régime moteur,
- ou si le débit mesuré par un capteur 14 de débit à l'entrée d'admission du moteur est inférieur à un seuil DS1 défini par cartographie selon le régime moteur.
De même, le moyen de sélection décide le passage du mode mono-turbo régulé par ladite vanne VT2 d'isolement au mode transitoire mono-turbo/bi-turbo :
d'une part,
- si la pression mesurée par le capteur 17 de pression à l'entrée du moteur est supérieure à un seuil PS2défini par cartographie selon le régime moteur,

**Tableau 1**

| | |
|---|---|
| Passage du mode mono-turbo régulé WG1 au mode mono-turbo régulé VT2 | -si pression P mesurée par capteur 17 > seuil PS1 défini selon régime moteur, |
| | -ou si débit D mesuré par capteur 14 > seuil DS1 défini selon régime moteur. |
| Retour du mode mono-turbo régulé VT2 au mode mono-turbo régulé WG1 | -si P mesurée par capteur 17 < seuil PS1 défini selon régime moteur, |
| | -ou si débit D mesuré par capteur 14 < seuil DS1 défini selon régime moteur. |
| Passage du mode mono-turbo régulé VT2 au mode transitoire mono-turbo/bi-turbo | -si P mesurée par capteur 17 > seuil PS2 défini selon régime moteur, |
| | -ou si débit D mesuré par capteur 14 > seuil DS2 défini selon régime moteur, |
| | ET |
| | -si la condition « accélération forte » n'est pas remplie, soit : |
| | Pconsigne - Pmesurée par capteur 17 > seuil PS3 défini selon régime moteur et débit. |
| Passage mode transitoire mono biturbo au mode biturbo | Après un certain temps (temporisation ΔT1 prédéterminée) |
| Retour du mode bi-turbo au mode transitoire bi-turbo/mono-turbo | -si P mesurée par capteur 17 < seuil PS3 défini selon régime moteur, |
| | -ou si débit D mesuré par capteur 14 < seuil DS3 défini selon régime moteur. |
| Passage du mode transitoire bi-turbo/mono-turbo au mode mono-turbo régulé VT2 | Après un certain temps (temporisation ΔT2 prédéterminée) |

**Tableau 2**

| **Mode mono-turbo régulé par WG1** | | |
|---|---|---|
| WG1 | Régulation de la pression de suralimentation | Immédiat |
| VT2 | Régulation de position sur les risques de fuite d'huile | Immédiat |
| VC2 f | Fermeture complète | Immédiat |
| Vrecirc | Ouverture complète | Immédiat |

| **Mode mono-turbo régulé par VT2** | | |
|---|---|---|
| WG1 | Fermeture complète | Temporisation ΔT3 |
| VT2 | Régulation de la pression de suralimentation | Temporisation ΔT4 |
| VC2 | Pas d'ordre car VC2 s'entrouvre en fonction de la pression du circuit | Temporisation ΔT5 |
| Vrecirc | Ouverture complète | Temporisation ΔT6 |

| **Mode bi-turbo** | | |
|---|---|---|
| WG1 | Régulation de la pression de suralimentation | Immédiat |
| VT2 | Ouverture complète | Immédiat |
| VC2 | Ouverture complète | Immédiat |
| Vrecirc | Fermeture complète | Immédiat |

| **Transition mono-turbo/bi-turbo** | | |
|---|---|---|
| WG1 | Régulation de la pression de suralimentation | -temporisation ΔT7 |
| | | - ou si ouverture de VT2 > seuil défini OS1 |
| | | - ou Pmesurée par capteur 17 > seuil PS4 défini |
| VT2 | Ouverture complète | Immédiat |
| VC2 | Ouverture complète | -temporisation ΔT8 |
| | | -ou ouverture de VT2 > seuil OS2 défini |
| | | -ou Pmesurée par capteur 16 > Pestimée1 |
| Vrecirc | Fermeture complète | -temporisation ΔT9 |
| | | -ou si ouverture de VT2 < seuil OS3 défini |
| | | -ou Pmesurée par capteur 16 > Pestimée2 |

| **Transition bi-turbo/mono-turbo** | | |
|---|---|---|
| WG1 | Ouverture intermédiaire calibrable | Temporisation ΔT10 |
| VT2 | Ouverture intermédiaire calibrable | Temporisation ΔT11 |
| VC2 | Fermeture complète | -temporisation ΔT12 |
| | | -ou si ouverture de VT2 > seuil OS4 défini |
| | | -ou Pmesurée par capteur 17 > seuil PS5 défini |
| | | - ou Pmesurée par capteur 15 > seuil PS6 défini |
| Vrecirc | Ouverture complète | -Pmesurée par capteur 17 > seuil PS7 défini |
| | | -ou VC2 demandée fermée ET temporisation ΔT13 |

- ou si le débit mesuré par un capteur 14 de débit à l'entrée d'admission du moteur est supérieur à un seuil DS2 défini par cartographie selon le régime moteur, et, d'autre part, si la différence entre une pression de consigne calculée par le calculateur moteur et la pression mesurée par le capteur 17 de pression à l'entrée du moteur est supérieure à un seuil PS3 défini par cartographie selon le régime moteur et le débit.

De même, le moyen de sélection décide le passage du mode transitoire mono-turbo/bi-turbo au mode bi-turbo après une temporisation ΔT1 prédéterminée.

De même, le moyen de sélection décide le passage du mode bi-turbo au mode transitoire bi-turbo/mono-turbo :
- si la pression mesurée par le capteur 17 de pression à l'entrée du moteur est inférieure à un seuil PS3 défini par cartographie selon le régime moteur,
- ou si le débit mesuré par un capteur 14 de débit à l'entrée d'admission du moteur est inférieur à un seuil DS3 défini par cartographie selon le régime moteur.

De même, le moyen de sélection décide le passage du mode transitoire bi-turbo/mono-turbo au mode mono-turbo régulé par ladite vanne VT2 d'isolement après une temporisation ΔT2 prédéterminée.

Conformément au tableau 2 résumant les actions du moyen de commande, ou contrôleur, relatif à chaque mode de fonctionnement du système de suralimentation :
1. Le moyen de commande exécute le mode mono-turbo régulé par ladite vanne WG1 de régulation par :
   - régulation immédiate de la pression de suralimentation par la vanne WG1 de régulation,
   - régulation immédiate de position de la ladite vanne VT2 d'isolement sur les risques de fuites d'huile,
   - fermeture complète immédiate d'une vanne VC2 d'isolement du compresseur 4' du deuxième turbocompresseur 4,
   - ouverture complète immédiate d'une vanne Vrecirc de recirculation d'air de suralimentation.
2. Le moyen de commande exécute le mode mono-turbo régulé par ladite vanne VT2 d'isolement par :
   - fermeture complète temporisée AT3 de ladite vanne WG1 de régulation,
   - régulation temporisée ΔT4 de la pression de suralimentation par ladite vanne VT2 d'isolement,
   - ouverture complète temporisée ΔT6 d'une vanne Vrecirc de recirculation d'air de suralimentation.

   La vanne VC2 d'isolement s'entrouvre en fonction de la pression du circuit avec une temporisation ΔT5.
3. Le moyen de commande exécute le mode transitoire mono-turbo/bi-turbo par :
   - régulation de la pression de suralimentation par ladite vanne WG1 de régulation,
   - ouverture complète immédiate de ladite vanne VT2 d'isolement,
   - ouverture complète d'une vanne VC2 d'isolement du compresseur 4' du deuxième turbocompresseur 4,
   - fermeture complète d'une vanne Vrecirc de recirculation d'air de suralimentation.

   Plus précisément, la régulation de la pression de suralimentation par la vanne WG1 de régulation est exécutée :
   - après une temporisation ΔT7 prédéterminée,
   - ou si l'ouverture de la vanne VT2 d'isolement est supérieure à un seuil OS4 déterminé,
   - ou si la pression mesurée par le capteur 17 de pression à l'entrée du moteur 9 est supérieure à un seuil PS4 déterminé.

   De même que l'ouverture complète de ladite vanne VC2 d'isolement est exécutée :
   - après une temporisation ΔT8 prédéterminée,
   - ou si l'ouverture de la vanne VT2 d'isolement est supérieure à un seuil OS2 déterminé,
   - ou si la pression mesurée par un capteur 16 de pression en sortie du compresseur 4' du deuxième turbocompresseur 4 est supérieure à une pression estimée Pestimée1 par le calculateur moteur.

   Et de même que la fermeture complète de la vanne Vrecirc de recirculation d'air de suralimentation est exécutée :
   - après une temporisation ΔT9 prédéterminée,
   - ou si l'ouverture de la vanne VT2 d'isolement est inférieure à un seuil OS3 déterminé,
   - ou si la pression mesurée par un capteur 16 de pression en sortie du compresseur 4' du deuxième turbocompresseur 4 est supérieure à une pression estimée Pestimée2 par le calculateur moteur.
4. Le moyen de commande exécute le mode bi-turbo par :
   - régulation immédiate de la pression de suralimentation par la vanne WG1 de régulation,
   - ouverture complète immédiate de ladite vanne VT2 d'isolement,
   - ouverture complète immédiate d'une vanne VC2 d'isolement du compresseur 4' du deuxième turbocompresseur 4,
   - fermeture complète immédiate d'une vanne Vrecirc de recirculation d'air de suralimentation.
5. Le moyen de commande exécute le mode transitoire bi-turbo/mono-turbo par :
   - ouverture intermédiaire calibrable temporisée ΔT10 de ladite vanne WG1 de régulation,
   - ouverture intermédiaire calibrable temporisée ΔT11 de ladite vanne VT2 d'isolement,
   - fermeture complète d'une vanne VC2 d'isolement du compresseur 4' du deuxième turbocompresseur 4,
   - ouverture complète d'une vanne Vrecirc de recirculation d'air de suralimentation.

Plus précisément, la fermeture complète de la vanne VC2 d'isolement est exécutée :
- après une temporisation ΔT12 prédéterminée,
- ou si l'ouverture de la vanne VT2 d'isolement est supérieure à un seuil OS4 déterminé,
- ou si la pression mesurée par le capteur 17 de pression à l'entrée du moteur est supérieure à un seuil PS5 déterminé,
- ou si la pression mesurée par un capteur 16 de pression en sortie du compresseur 4' du deuxième turbocompresseur 4 est supérieure à un seuil PS6 déterminé.

De même que l'ouverture complète de la vanne Vrecirc de recirculation d'air de suralimentation est exécutée :
- si la pression mesurée par le capteur 17 de pression à l'entrée du moteur 9 est supérieure à un seuil PS7 déterminé,
- si la vanne VC2 d'isolement est commandée à la fermeture et après une temporisation ΔT13 prédéterminée.

La description qui précède fait apparaître un certain nombre de seuils et temporisations. Les valeurs de ces paramètres sont choisies de manière à :
- respecter les contraintes organiques imposées par les divers composants du système, telles que température maximum, régime maximum pour les turbocompresseurs, respect des champs compresseurs,
- optimiser l'agrément de conduite et le ressenti du conducteur lors des changements de modes turbo,
- prendre en compte les dispersions à neuf et en vieillissement des divers éléments composant le système, telles que caractéristiques fonctionnelles et géométriques des vannes et des turbocompresseurs, précision des capteurs et dispersions associées à tous ces éléments.

## Revendications

1. Dispositif de contrôle d'un système de suralimentation pour moteur (9) à allumage par compression, le système de suralimentation comprenant un premier (3) et un deuxième (4) turbocompresseurs montés en parallèle fonctionnant séquentiellement, ainsi qu'un ensemble de capteurs, dont un capteur (17) de pression à l'entrée du moteur, et de vannes définissant divers modes de fonctionnement dudit système, le dispositif de contrôle comprend :
- un moyen de sélection des modes de fonctionnement du système de suralimentation, apte à recevoir des informations fournis par lesdits capteurs dont le capteur (17) de pression à l'entrée du moteur et à sélectionner un mode de fonctionnement du système en fonction desdites informations,
- un moyen de commande desdites vannes en fonction du mode de fonctionnement sélectionné par ledit moyen de sélection, lesdits modes de fonctionnement incluant des modes transitoires lors de l'activation ou la désactivation du deuxième turbocompresseur (4),
le dispositif de contrôle est **caractérisé en ce que**:
- ledit modes transitoires comportant, pour l'activation du deuxième turbocompresseur, l'ouverture partielle d'une vanne d'isolement (VT2) de la turbine (4") dudit second turbocompresseur afin de mettre en rotation la turbine (4") et d'augmenter la pression fournie par le compresseur (4') du deuxième turbocompresseur jusqu'à ce que cette pression soit équivalente à celle fournie par le compresseur (3') du premier turbocompresseur (3) et le passage dans un mode bi-turbo avec l'ouverture complète de la vanne d'isolement (VT2).

2. Dispositif de contrôle selon la revendication 1, **caractérisé en ce que** les modes de fonctionnement sont :
- un mode mono-turbo régulé par une vanne (WG1) de régulation de la turbine (3") du premier turbocompresseur (3),
- un mode mono-turbo régulé par une vanne (VT2) d'isolement de la turbine (4") du deuxième turbocompresseur (4),
- un mode transitoire mono-turbo/bi-turbo,
- un mode bi-turbo,
- un mode transitoire bi-turbo/mono-turbo.

3. Dispositif de contrôle selon la revendication 2, **caractérisé en ce que** le moyen de sélection décide le passage du mode mono-turbo régulé par ladite vanne (WG1) de régulation au mode mono-turbo régulé par ladite vanne (VT2) d'isolement :
- si la pression mesurée par le capteur (17) de pression à l'entrée du moteur est supérieure à un seuil (PS1) défini par cartographie selon le régime moteur,
- ou si le débit mesuré par un capteur (14) de débit à l'entrée d'admission du moteur est supérieur à un seuil (DS1) défini par cartographie selon le régime moteur.

4. Dispositif de contrôle selon la revendication 2, **caractérisé en ce que** le moyen de sélection décide le passage du mode mono-turbo régulé par ladite vanne (VT2) d'isolement au mode mono-turbo régulé par ladite vanne (WG1) de régulation :
- si la pression mesurée par le capteur (17) de pression à l'entrée du moteur est inférieure à un seuil (PS1) défini par cartographie selon le régime moteur,
- ou si le débit mesuré par un capteur (14) de débit à l'entrée d'admission du moteur est inférieur à un seuil (DS1) défini par cartographie selon le régime moteur.

5. Dispositif de contrôle selon la revendication 2, **caractérisé en ce que** le moyen de sélection décide le passage du mode mono-turbo régulé par ladite vanne (VT2) d'isolement au mode transitoire mono-turbo/bi-turbo :
d'une part,
- si la pression mesurée par le capteur (17) de pression à l'entrée du moteur est supérieure à un seuil (PS2) défini par cartographie selon le régime moteur,
- ou si le débit mesuré par un capteur (14) de débit à l'entrée d'admission du moteur est supérieur à un seuil (DS2) défini par cartographie selon le régime moteur, et, d'autre part, si la différence entre une pression de consigne calculée par le calculateur moteur et la pression mesurée par le capteur (17) de pression à l'entrée du moteur est supérieure à un seuil (PS3) défini par cartographie selon le régime moteur et le débit.

6. Dispositif de contrôle selon la revendication 2, **caractérisé en ce que** le moyen de sélection décide le passage du mode transitoire mono-turbo/bi-turbo au mode bi-turbo après une temporisation (ΔT1) prédéterminée.

7. Dispositif de contrôle selon la revendication 2, **caractérisé en ce que** le moyen de sélection décide le passage du mode bi-turbo au mode transitoire bi-turbo/mono-turbo:
- si la pression mesurée par le capteur (17) de pression à l'entrée du moteur est inférieure à un seuil (PS3) défini par cartographie selon le régime moteur,
- ou si le débit mesuré par un capteur (14) de débit à l'entrée d'admission du moteur est inférieur à un seuil (DS3) défini par cartographie selon le régime moteur.

8. Dispositif de contrôle selon la revendication 2, **caractérisé en ce que** le moyen de sélection décide le passage du mode transitoire bi-turbo/mono-turbo au mode mono-turbo régulé par ladite vanne (VT2) d'isolement après une temporisation (ΔT2) prédéterminée.

9. Dispositif de contrôle selon la revendication 2, **caractérisé en ce que** le moyen de commande exécute le mode mono-turbo régulé par ladite vanne (WG1) de régulation par :
- régulation immédiate de la pression de suralimentation par la vanne (WG1) de régulation,
- régulation immédiate de position de la ladite vanne (VT2) d'isolement sur les risques de fuites d'huile,
- fermeture complète immédiate d'une vanne (VC2) d'isolement du compresseur (4') du deuxième turbocompresseur (4),
- ouverture complète immédiate d'une vanne (Vrecirc) de recirculation d'air de suralimentation.

10. Dispositif de contrôle selon la revendication 2, **caractérisé en ce que** le moyen de commande exécute le mode mono-turbo régulé par ladite vanne (VT2) d'isolement par:
- fermeture complète temporisée (ΔT3) de ladite vanne (WG1) de régulation,
- régulation temporisée (T4) de la pression de suralimentation par ladite vanne (VT2) d'isolement,
- ouverture complète temporisée (T6) d'une vanne (Vrecirc) de recirculation d'air de suralimentation.

11. Dispositif de contrôle selon la revendication 2, **caractérisé en ce que** le moyen de commande exécute le mode transitoire mono-turbo/bi-turbo par :
- régulation de la pression de suralimentation par ladite vanne (WG1) de régulation,
- ouverture complète immédiate de ladite vanne (VT2) d'isolement,
- ouverture complète d'une vanne (VC2) d'isolement du compresseur (4') du deuxième turbocompresseur (4),
- fermeture complète d'une vanne (Vrecirc) de recirculation d'air de suralimentation.

12. Dispositif de contrôle selon la revendication 11, **caractérisé en ce que** la régulation de la pression de suralimentation par la vanne (WG1) de régulation est exécutée :
- après une temporisation (ΔT7) prédéterminée,
- ou si l'ouverture de la vanne (VT2) d'isolement est supérieure à un seuil (OS1) déterminé,
- ou si la pression mesurée par le capteur (17) de pression à l'entrée du moteur (9) est supérieure à un seuil (PS4) déterminé.

13. Dispositif de contrôle selon la revendication 11, **caractérisé en ce que** l'ouverture complète de ladite vanne (VC2) d'isolement est exécutée :
- après une temporisation (ΔT8) prédéterminée,
- ou si l'ouverture de la vanne (VT2) d'isolement est supérieure à un seuil (OS2) déterminé,
- ou si la pression mesurée par un capteur (16) de pression en sortie du compresseur (4') du deuxième turbocompresseur (4) est supérieure à une pression estimée (Pestimée1) par le calculateur moteur.

14. Dispositif de contrôle selon la revendication 11, **caractérisé en ce que** la fermeture complète de la vanne (Vrecirc) de recirculation d'air de suralimentation est exécutée :
- après une temporisation (ΔT9) prédéterminée,
- ou si l'ouverture de la vanne (VT2) d'isolement est inférieure à un seuil (OS3) déterminé,
- ou si la pression mesurée par un capteur (16) de pression en sortie du compresseur (4') du deuxième turbocompresseur (4) est supérieure à une pression estimée (Pestimée2) par le calculateur moteur.

15. Dispositif de contrôle selon la revendication 2, **caractérisé en ce que** le moyen de commande exécute le mode bi-turbo par :
- régulation immédiate de la pression de suralimentation par la vanne (WG1) de régulation,
- ouverture complète immédiate de ladite vanne (VT2) d'isolement,
- ouverture complète immédiate d'une vanne (VC2) d'isolement du compresseur (4') du deuxième turbocompresseur (4),
- fermeture complète immédiate d'une vanne (Vrecirc) de recirculation d'air de suralimentation.

16. Dispositif de contrôle selon la revendication 2, **caractérisé en ce que** le moyen de commande exécute le mode transitoire bi-turbo/mono-turbo par :
- ouverture intermédiaire calibrable temporisée (ΔT10) de ladite vanne (WG1) de régulation,
- ouverture intermédiaire calibrable temporisée (ΔT11) de ladite vanne (VT2) d'isolement,
- fermeture complète d'une vanne (VC2) d'isolement du compresseur (4') du deuxième turbocompresseur (4),
- ouverture complète d'une vanne (Vrecirc) de recirculation d'air de suralimentation.

17. Dispositif de contrôle selon la revendication 16, **caractérisé en ce que** la fermeture complète de la vanne (VC2) d'isolement est exécutée :
- après une temporisation (ΔT12) prédéterminée,
- ou si l'ouverture de la vanne (VT2) d'isolement est supérieure à un seuil (OS4) déterminé,
- ou si la pression mesurée par le capteur (17) de pression à l'entrée du moteur est supérieure à un seuil (PS5) déterminé,
- ou si la pression mesurée par un capteur (16) de pression en sortie du compresseur (4') du deuxième turbocompresseur (4) est supérieure à un seuil (PS6) déterminé.

18. Dispositif de contrôle selon la revendication 16, **caractérisé en ce que** l'ouverture complète de la vanne (Vrecirc) de recirculation d'air de suralimentation est exécutée :
- si la pression mesurée par le capteur (17) de pression à l'entrée du moteur (9) est supérieure à un seuil (PS7) déterminé,
- si la vanne (VC2) d'isolement est commandée à la fermeture et après une temporisation (ΔT13) prédéterminée.

## Claims

1. Device for controlling a supercharging system for a compression-ignition engine (9), the supercharging system comprising a first turbocharger (3) and a second turbocharger (4) mounted in parallel operating sequentially, and a set of sensors, including one pressure sensor (17) at the engine entrance, and valves defining various modes of operation of the said system, the control device comprising:
- a means for selecting the modes of operation of the supercharging system, capable of receiving information supplied by the said sensors, including the pressure sensor (17) at the engine entrance, and of selecting a mode of operation of the system according to the said information,
- a means for controlling the said valves according to the mode of operation selected by the said selection means, the said modes of operation including transition modes during the activation or deactivation of the second turbocharger (4),
the control device being **characterized in that**:
- the said transition modes comprise, for the activation of the second turbocharger, the partial opening of an isolation valve (VT2) of the turbine (4'') of the said second turbocharger in order to cause the turbine (4'') to rotate and to increase the pressure supplied by the compressor (4') of the second turbocharger until this pressure is equivalent to that supplied by the compressor (3') of the first turbocharger (3) and the transition into a bi-turbo mode with the complete opening of the isolation valve (VT2).

2. Control device according to Claim 1, **characterized in that** the modes of operation are:
- a mono-turbo mode regulated by a valve (WG1) for regulating the turbine (3'') of the first turbocharger (3),
- a mono-turbo mode regulated by a valve (VT2) for isolating the turbine (4'') of the second turbocharger (4),
- a mono-turbo/bi-turbo transition mode
- a bi-turbo mode,
- a bi-turbo/mono-turbo transition mode.

3. Control device according to Claim 2, **characterized in that** the selection means decides on the transition from the mono-turbo mode regulated by the said regulation valve (WG1) to the mono-turbo mode regulated by the said isolation valve (VT2):
- if the pressure measured by the pressure sensor (17) at the engine entrance is greater than a threshold (PS1) defined by mapping according to the engine speed,
- or if the output measured by an output sensor (14) at the engine intake entrance is greater than a threshold (DS1) defined by mapping according to the engine speed.

4. Control device according to Claim 2, **characterized in that** the selection means decides on the transition from the mono-turbo mode regulated by the said isolation valve (VT2) to the mono-turbo mode regulated by the said regulation valve (WG1):
- if the pressure measured by the pressure sensor (17) at the engine entrance is less than a threshold (PS1) defined by mapping according to the engine speed,
- or if the output measured by an output sensor (14) at the engine intake entrance is less than a threshold (DS1) defined by mapping according to the engine speed.

5. Control device according to Claim 2, **characterized in that** the selection means decides on the transition from the mono-turbo mode regulated by the said isolation valve (VT2) to the mono-turbo/bi-turbo transition mode:
on the one hand,
- if the pressure measured by the pressure sensor (17) at the engine entrance is greater than a threshold (PS2) defined by mapping according to the engine speed,
- or if the output measured by an output sensor (14) at the engine intake entrance is greater than a threshold (DS2) defined by mapping according to the engine speed, and,
on the other hand, if the difference between a setpoint pressure computed by the engine computer and the pressure measured by the pressure sensor (17) at the engine entrance is greater than a threshold (PS3) defined by mapping according to the engine speed and the output.

6. Control device according to Claim 2, **characterized in that** the selection means decides on the transition from the mono-turbo/bi-turbo transition mode to the bi-turbo mode after a predetermined time delay (ΔT1).

7. Control device according to Claim 2, **characterized in that** the selection means decides on the transition from the bi-turbo mode to the bi-turbo/mono-turbo transition mode:
- if the pressure measured by the pressure sensor (17) at the engine entrance is less than a threshold (PS3) defined by mapping according to the engine speed,
- or if the output measured by an output sensor (14) at the engine intake entrance is less than a threshold (DS3) defined by mapping according to the engine speed.

8. Control device according to Claim 2, **characterized in that** the selection means decides on the transition from the bi-turbo/mono-turbo transition mode to the mono-turbo mode regulated by the said isolation valve (VT2) after a predetermined time delay (ΔT2).

9. Control device according to Claim 2, **characterized in that** the control means executes the mono-turbo mode regulated by the said regulation valve (WG1) by:
- immediate regulation of the supercharging pressure by the regulation valve (WG1),
- immediate regulation of position of the said isolation valve (VT2) on the risks of oil leaks,
- immediate complete closure of an isolation valve (VC2) of the compressor (4') of the second turbocharger (4),
- immediate complete opening of a supercharging air recirculation valve (Vrecirc).

10. Control device according to Claim 2, **characterized in that** the control means executes the mono-turbo mode regulated by the said isolation valve (VT2) by:
- timed complete closure (ΔT3) of the said regulation valve (WG1),
- timed regulation (T4) of the supercharging pressure by the said isolation valve (VT2),
- timed complete opening (T6) of a supercharging air recirculation valve (Vrecirc).

11. Control device according to Claim 2, **characterized in that** the control means executes the mono-turbo/bi-turbo transition mode by:
- regulation of the supercharging pressure by the said regulation valve (WG1),
- immediate complete opening of the said isolation valve (VT2),
- complete opening of an isolation valve (VC2) of the compressor (4') of the second turbocharger (4),
- complete closure of a supercharging air recirculation valve (Vrecirc).

12. Control device according to Claim 11, **characterized in that** the regulation of the supercharging pressure by the regulation valve (WG1) is executed:
- after a predetermined time delay (ΔT7),
- or if the opening of the isolation valve (VT2) is greater than a determined threshold (OS1),
- or if the pressure measured by the pressure sensor (17) at the entrance of the engine (9) is greater than a determined threshold (PS4).

13. Control device according to Claim 11, **characterized in that** the complete opening of the said isolation valve (VC2) is executed:
- after a predetermined time delay (ΔT8),
- or if the opening of the isolation valve (VT2) is greater than a determined threshold (OS2),
- or if the pressure measured by a pressure sensor (16) at the outlet of the compressor (4') of the second turbocharger (4) is greater than a pressure (Pestimée1) estimated by the engine computer.

14. Control device according to Claim 11, **characterized in that** the complete closure of the supercharging air recirculation valve (Vrecirc) is executed:
- after a predetermined time delay (ΔT9),
- or if the opening of the isolation valve (VT2) is less than a determined threshold (OS3),
- or if the pressure measured by a pressure sensor (16) at the outlet of the compressor (4') of the second turbocharger (4) is greater than a pressure (Pestimée2) estimated by the engine computer.

15. Control device according to Claim 2, **characterized in that** the control means executes the bi-turbo mode by:
- immediate regulation of the supercharging pressure by the regulation valve (WG1),
- immediate complete opening of the said isolation valve (VT2),
- immediate complete opening of an isolation valve (VC2) of the compressor (4') of the second turbocharger (4),
- immediate complete closure of a supercharging air recirculation valve (Vrecirc).

16. Control device according to Claim 2, **characterized in that** the control means executes the bi-turbo/mono-turbo transition mode by:
- timed calibratable intermediate opening (ΔT10) of the said regulation valve (WG1),
- timed calibratable intermediate opening (ΔT11) of the said isolation valve (VT2),
- complete closure of an isolation valve (VC2) of the compressor (4') of the second turbocharger (4),
- complete opening of a supercharging air recirculation valve (Vrecirc).

17. Control device according to Claim 16, **characterized in that** the complete closure of the isolation valve (VC2) is executed:
- after a predetermined time delay (ΔT12),
- or if the opening of the isolation valve (VT2) is greater than a determined threshold (OS4),
- or if the pressure measured by the pressure sensor (17) at the engine entrance is greater than a determined threshold (PS5),
- or if the pressure measured by a pressure sensor (16) at the outlet of the compressor (4') of the second turbocharger (4) is greater than a determined threshold (PS6).

18. Control device according to Claim 16, **characterized in that** the complete opening of the supercharging air recirculation valve (Vrecirc) is executed:
- if the pressure measured by the pressure sensor (17) at the entrance of the engine (9) is greater than a determined threshold (PS7),
- if the isolation valve (VC2) is controlled to close after a predetermined time delay (ΔT13).

## Patentansprüche

1. Vorrichtung zur Steuerung eines Aufladesystems für einen Kompressionsmotor (9), wobei das Aufladesystem einen ersten (3) und einen zweiten (4) Turbokompressor, die parallel montiert sind und sequentiell funktionieren, sowie eine Gesamtheit von Fühlern, unter anderem einen Druckfühler (17) am Eingang des Motors, und Ventile umfasst, die verschiedene Funktionsmodi des Systems definieren, wobei die Steuervorrichtung umfasst:
- ein Mittel zur Auswahl der Funktionsmodi des Aufladesystems, das Informationen aufnehmen kann, die von den Fühlern, unter anderem dem Druckfühler (17) am Eingang des Motors, geliefert werden, und das einen Funktionsmodus des Systems in Abhängigkeit von den Informationen wählen kann,
- ein Mittel zur Steuerung der Ventile in Abhängigkeit von dem von dem Auswahlmittel gewählten Funktionsmodus, wobei die Funktionsmodi Übergangsmodi bei der Aktivierung oder Deaktivierung des zweiten Turbokompressors (4) einschließen,
wobei die Steuervorrichtung **dadurch gekennzeichnet ist, dass**:
- die Übergangsmodi für die Aktivierung des zweiten Turbokompressors die teilweise Öffnung eines Isolierventils (VT2) der Turbine (4") des zweiten Turbokompressors, um die Turbine (4'') in Drehung zu versetzen und den vom Kompressor (4') des zweiten Turbokompressors gelieferten Druck zu erhöhen, bis dieser Druck gleich dem vom Kompressor (3') des ersten Turbokompressors (3) gelieferten Drucks ist, und den Übergang in einen Bi-Turbo-Modus mit der völligen Öffnung des Isolierventils (VT2) umfassen.

2. Steuervorrichtung nach Anspruch 1, **dadurch gekennzeichnet, dass** die Funktionsmodi folgende sind:
- ein Mono-Turbo-Modus, der durch ein Regelventil (WG1) der Turbine (3'') des ersten Turbokompressors (3) geregelt wird,
- ein Mono-Turbo-Modus, der durch ein Isolierventil (VT2) der Turbine (4") des zweiten Turbokompressors (4) geregelt wird,
- ein Übergangsmodus Mono-Turbo/Bi-Turbo,
- ein Bi-Turbo-Modus,
- ein Übergangsmodus Bi-Turbo/Mono-Turbo.

3. Steuervorrichtung nach Anspruch 2, **dadurch gekennzeichnet, dass** das Auswahlmittel den Übergang vom Mono-Turbo-Modus, der vom Regelventil (WG1) geregelt wird, zum Mono-Turbo-Modus, der vom Isolierventil (VT2) geregelt wird, beschließt:
- wenn der vom Druckfühler (17) am Eingang des Motors gemessene Druck größer als eine Schwelle (PS1) ist, die von der Kartographie nach der Motordrehzahl definiert wird,
- oder wenn die von einem Durchflussmesser (14) gemessene Durchflussmenge am Einlasseingang des Motors größer als eine Schwelle (DS1) ist, die von der Kartographie nach der Motordrehzahl definiert wird.

4. Steuervorrichtung nach Anspruch 2, **dadurch gekennzeichnet, dass** das Auswahlmittel den Übergang vom Mono-Turbo-Modus, der vom Isolierventil (VT2) geregelt wird, zum Mono-Turbo-Modus, der vom Regelventil (WG1) geregelt wird, beschließt:
- wenn der vom Druckfühler (17) am Eingang des Motors gemessene Druck kleiner als eine Schwelle (PS1) ist, die von der Kartographie nach der Motordrehzahl definiert wird,
- oder wenn die von einem Durchflussmesser (14) gemessene Durchflussmenge am Einlasseingang des Motors kleiner als eine Schwelle (DS1) ist, die von der Kartographie nach der Motordrehzahl definiert wird.

5. Steuervorrichtung nach Anspruch 2, **dadurch gekennzeichnet, dass** das Auswahlmittel den Übergang vom Mono-Turbo-Modus, der vom Isolierventil (VT2) geregelt wird, zum Übergangsmodus Mono-Turbo/Bi-Turbo beschließt:
einerseits
- wenn der vom Druckfühler (17) am Eingang des Motors gemessene Druck größer als eine Schwelle (PS2) ist, die von der Kartographie nach der Motordrehzahl definiert wird,
- oder wenn die von einem Durchflussmesser (14) gemessene Durchflussmenge am Einlasseingang des Motors größer als eine Schwelle (DS2) ist, die von der Kartographie nach der Motordrehzahl definiert wird, und
andererseits
- wenn der Unterschied zwischen einem vom Motorrechner berechneten Solldruck und dem vom Druckfühler (17) am Eingang des Motors gemessene Druck größer als eine Schwelle (PS3) ist, die von der Kartographie nach der Motordrehzahl und der Durchflussmenge definiert wird.

6. Steuervorrichtung nach Anspruch 2, **dadurch gekennzeichnet, dass** das Auswahlmittel den Übergang vom Übergangsmodus Mono-Turbo/Bi-Turbo zum Bi-Turbo-Modus nach einer vorbestimmten Verzögerung (ΔT1) beschließt.

7. Steuervorrichtung nach Anspruch 2, **dadurch gekennzeichnet, dass** das Auswahlmittel den Übergang vom Bi-Turbo-Modus zum Übergangsmodus Bi-Turbo/Mono-Turbo beschließt:
- wenn der vom Druckfühler (17) am Eingang des Motors gemessene Druck kleiner als eine Schwelle (PS3) ist, die von der Kartographie nach der Motordrehzahl definiert wird,
- oder wenn die von einem Durchflussmesser (14) gemessene Durchflussmenge am Einlasseingang des Motors kleiner als eine Schwelle (DS3) ist, die von der Kartographie nach der Motordrehzahl definiert wird.

8. Steuervorrichtung nach Anspruch 2, **dadurch gekennzeichnet, dass** das Auswahlmittel den Übergang vom Übergangsmodus Bi-Turbo/Mono-Turbo zum Mono-Turbo-Modus, der vom Isolierventil (VT2) geregelt wird, nach einer vorbestimmten Verzögerung (ΔT2) beschließt.

9. Steuervorrichtung nach Anspruch 2, **dadurch gekennzeichnet, dass** das Steuermittel den Mono-Turbo-Modus, der vom Regelventil (WG1) geregelt wird, ausführt durch:
- sofortige Regelung des Aufladedrucks durch das Regelventil (WG1),
- sofortige Regelung der Position des Isolierventils (VT2) im Hinblick auf die Ölleckagegefahren,
- sofortigen vollständigen Verschluss eines Isolierventils (VC2) des Kompressors (4') des zweiten Turbokompressors (4),
- sofortige vollständige Öffnung eines Rezirkulationsventils (Vrecirc) der Aufladeluft.

10. Steuervorrichtung nach Anspruch 2, **dadurch gekennzeichnet, dass** das Steuermittel den Mono-Turbo-Modus, der vom Isolierventil (VT2) geregelt wird, ausführt durch:
- verzögertes vollständiges Schließen (ΔT3) des Regelventils (WG1),
- verzögerte Regelung (T4) des Aufladedrucks durch das Isolierventil (VT2),
- verzögertes vollständiges Öffnen (T6) eines Rezirkulationsventils (Vrecirc) der Aufladeluft.

11. Steuervorrichtung nach Anspruch 2, **dadurch gekennzeichnet, dass** das Steuermittel den Übergangsmodus Mono-Turbo/Bi-Turbo ausführt durch:
- Regelung des Aufladedrucks durch das Regelventil (WG1),
- sofortige vollständige Öffnung des Isolierventils (VT2),
- vollständige Öffnung eines Isolierventils (VC2) des Kompressors (4') des zweiten Turbokompressors (4),
- vollständiges Schließen eines Rezirkulationsventils (Vrecirc) der Aufladeluft.

12. Steuervorrichtung nach Anspruch 11, **dadurch gekennzeichnet, dass** die Regelung des Aufladedrucks durch das Regelventil (WG1) erfolgt:
- nach einer vorbestimmten Verzögerung (ΔT7),
- oder wenn die Öffnung des Isolierventils (VT2) größer als eine bestimmte Schwelle (OS1) ist,
- oder wenn der vom Druckfühler (17) am Eingang des Motors (9) gemessene Druck größer als eine bestimmte Schwelle (PS4) ist.

13. Steuervorrichtung nach Anspruch 11, **dadurch gekennzeichnet, dass** die vollständige Öffnung des Isolierventils (VC2) erfolgt:
- nach einer vorbestimmten Verzögerung (ΔT8),
- oder wenn die Öffnung des Isolierventils (VT2) größer als eine bestimmte Schwelle (OS2) ist,
- oder wenn der von einem Druckfühler (16) am Ausgang des Kompressors (4') des zweiten Turbokompressors (4) gemessene Druck größer als ein vom Motorrechner geschätzter Druck (Pestimée1) ist.

14. Steuervorrichtung nach Anspruch 11, **dadurch gekennzeichnet, dass** das vollständige Schließen des Rezirkulationsventils (Vrecirc) der Aufladeluft erfolgt:
- nach einer vorbestimmten Verzögerung (ΔT9),
- oder wenn die Öffnung des Isolierventils (VT2) kleiner als eine bestimmte Schwelle (OS3) ist,
- oder wenn der von einem Druckfühler (16) am Ausgang des Kompressors (4') des zweiten Turbokompressors (4) gemessene Druck größer als ein vom Motorrechner geschätzter Druck (Pestimée2) ist.

15. Steuervorrichtung nach Anspruch 2, **dadurch gekennzeichnet, dass** das Steuermittel den Bi-Turbo-Modus ausführt durch:
- sofortige Regelung des Aufladedrucks durch das Regelventil (WG1),
- sofortige vollständige Öffnung des Isolierventils (VT2),
- sofortige vollständige Öffnung eines Isolierventils (VC2) des Kompressors (4') des zweiten Turbokompressors (4),
- sofortiges vollständiges Schließen eines Rezirkulationsventils (Vrecirc) der Aufladeluft.

16. Steuervorrichtung nach Anspruch 2, **dadurch gekennzeichnet, dass** das Steuermittel den Übergangsmodus Bi-Turbo/Mono-Turbo ausführt durch:
- verzögerte kalibrierte Zwischenöffnung (ΔT10) des Regelventils (WG1),
- verzögerte kalibrierte Zwischenöffnung (ΔT11) des Isolierventils (VT2),
- vollständiges Schließen eines Isolierventils (VC2) des Kompressors (4') des zweiten Turbokompressors (4),
- vollständige Öffnung eines Rezirkulationsventils (Vrecirc) der Aufladeluft.

17. Steuervorrichtung nach Anspruch 16, **dadurch gekennzeichnet, dass** das vollständige Schließen des Isolierventils (VC2) erfolgt:
- nach einer vorbestimmten Verzögerung (ΔT12),
- oder wenn die Öffnung des Isolierventils (VT2) größer als eine bestimmte Schwelle (OS4) ist,
- oder wenn der vom Druckfühler (17) am Eingang des Motors gemessene Druck größer als eine bestimmte Schwelle (PS5) ist,
- oder wenn der von einem Druckfühler (16) am Ausgang des Kompressors (4') des zweiten Turbokompressors (4) gemessene Druck größer als eine bestimmte Schwelle (PS6) ist.

18. Steuervorrichtung nach Anspruch 16, **dadurch gekennzeichnet, dass** die vollständige Öffnung des Rezirkulationsventils (Vrecirc) der Aufladeluft erfolgt:
- wenn der vom Druckfühler (17) am Eingang des Motors (9) gemessene Druck größer als eine bestimmte Schwelle (PS7) ist,
- wenn das Isolierventil (VC2) auf Schließen und nach einer vorbestimmten Verzögerung (ΔT13) gesteuert wird.
